# EUROPEAN PATENT SPECIFICATION

(11) **EP 3 447 555 B1**
(45) Date of publication and mention of the grant of the patent: **23.09.2026**
(21) Application number: 18189840.4
(22) Date of filing: 21.08.2018
(51) Int. Cl.: G02B 6/44, G02B 6/38

(54) **FIBER OPTIC CONNECTOR**
FASEROPTISCHER VERBINDER
CONNECTEUR À FIBRE OPTIQUE

(30) Priority: 23.08.2017 CN 201710729354
(43) Date of publication of application: 27.02.2019
(73) Proprietor: Tyco Electronics (Shanghai) Co. Ltd., Shanghai Guangdong (CN)
(72) Inventor: ZHANG, Haibo, Shanghai, 200233 (CN); SONG, Zhigang, Shanghai, 200233 (CN); ZHANG, Jinqiang, Shanghai, 200233 (CN); ZHONG, Zhiyun, Dongguan, 523071 (CN)
(74) Representative: Grünecker Patent- und Rechtsanwälte PartG mbB

(56) References cited:
- EP-A1- 2 431 776
- EP-B1- 3 036 573
- WO-A1-2013/177014
- US-A1- 2014 154 914
- US-A1- 2017 102 507
- US-B1- 6 351 593

## Description

### CROSS-REFERENCE TO RELATED APPLICATIONS

This application claims the benefit of the Chinese Patent Application No. 201710729354.3 filed on August 23, 2017 in the State Intellectual Property Office of China and entitled with "FIBER OPTIC CONNECTOR".

### Field of the DISCLOSURE

The disclosure relates to a fiber optic connector including: an outer housing; an inner housing installed in the outer housing; a fiber optic ferrule accommodated in the inner housing; an optical cable inserted into the inner housing and connected to the fiber optic ferrule and an elastic boot that is wrapped around both a connecting portion of the fiber optic ferrule connecting to the optical cable and a portion of the optical cable adjacent to the connecting portion.

### Description of the Related Art

In the relevant art, a fiber optic connector for outdoor use generally includes an outer housing, an inner housing installed in the outer housing, and a fiber optic ferrule accommodated in the inner housing. One end of an optical cable is inserted from rear ends of the outer housing and the inner housing into the fiber optic connector. A reinforcing element of the optical cable (for example, Kevlar fiber) is fixed to a rear seat of the fiber optic ferrule, and optical fibers of the optical cable are inserted into respective insertion holes in the fiber optic ferrule. Prior to mating with a mating fiber optic connector, the outer housing of the fiber optic connector is usually locked to a connecting seat that is typically hermetically mounted on a mounting panel.

In order to meet requirements for outdoor use, an existing outdoor fiber optic connector may have a waterproof sealing structure. However, the waterproof sealing structure of the existing outdoor fiber optic connector is usually designed only for the inner housing of the fiber optic connector, that is, it is typical to only provide an elastic sealing ring between the inner housing and the rear seat of the fiber optic ferrule. No sealing structure is provided between the outer housing and the optical cable. Therefore, the existing outdoor fiber optic connector has low sealing reliability.

A cable sealing device is described in US 2017/0102507 A1. The cable sealing device comprises an spreading member disposed around a cable, the spreading member being axially movable with respect to the cable. An elastic sleeve is concentrically disposed around the cable and over the spreading member.

A system for sealing a cable entrance end of a connector is described in WO 2013/177014 A1. The system comprises a sealing member that defines an inner passage for receiving a cable. The sealing member also includes a front end adapted to form a seal against the cable entrance end of the connector.

US 6,351,593 B1 concerns a hermetically sealed fiber optic connector for connecting at least two fiber optic cables and EP 2 431 776 A1 concerns an insulation flexible metal sleeve optic fiber patch cord for resolving increased loss caused by bending of an optic fiber.

US 2014/154914 A1 relates to a mating enclosure having a flange. The flange has a forward face, a rearward face and a first outer perimeter. Furthermore, the flange is provided with a central opening that has a second outer perimeter contained within the first outer perimeter. The flange further comprises at least one protrusion protruding substantially perpendicularly from the forward face of the flange, wherein the protrusion has an inner surface facing the central opening, an outer surface facing away from the central opening and a forward surface facing in the same direction as the forward face of the flange. At least one locking element positioned on the outer surface of the protrusion is provided, wherein the locking element is at rest such that a distance between the outer perimeter of the flange and the locking element is less than a distance between the outer perimeter of the flange and the outer surface of the protrusion.

EP 3 036 573 A1 relates to a fiber optic connector system having rugged, robust designs that are environmentally sealed and that are relatively easy to install and uninstall in the field. The connectors include a first seal on a release sleeve and a second seal between the release sleeve and a connector body. Other connectors include a seal and a flexible latch on a connector.

### SUMMARY

The invention provides a fiber optic connector according to independent claim 1.

In an embodiment, the sealing structure includes a snap ring and an elastic sealing ring that both are provided in the rear end portion of the outer housing, the elastic sealing ring being located between the snap ring and a rear end wall of the outer housing. A rear end of the inner housing is pressed against the snap ring, and the elastic boot is inserted from a rear end of the outer housing and passes through the snap ring and the elastic sealing ring.

In a further embodiment, the outer housing is configured to generate an axial pressing force for urging the elastic sealing ring forward, so that the elastic sealing ring is sandwiched between a rear end of the snap ring and the rear end wall of the outer housing and is brought into close contact with both an outer peripheral surface of the elastic boot and an inner surface of the rear end wall of the outer housing.

In a further embodiment, an annular protrusion is provided on an inner surface of the outer housing, the annular protrusion being configured to hold the snap ring in the rear end portion of the outer housing so as to prevent the snap ring from being disengaged from the outer housing.

In a further embodiment, the snap ring is flared and has a front opening and a rear opening, the front opening having a diameter greater than the rear opening.

In a further embodiment, an edge portion at the front opening of the snap ring is slidable through the annular protrusion in an axially rearward direction and is not slidable through the annular protrusion in an axially forward direction, so as to prevent the snap ring from being disengaged from the outer housing.

In a further embodiment, a front end portion of the snap ring has a thickness less than other portions of the snap ring, and a plurality of notches are formed on the edge portion at the front opening of the snap ring so as to increase an elasticity of the front end portion of the snap ring, so that the edge portion at the front opening of the snap ring is smoothly slidable through the annular protrusion.

In a further embodiment, the rear opening of the snap ring has a conical inner surface which is inwardly tapered, the conical inner surface being pressed against the elastic sealing ring.

In a further embodiment, a rear end portion of the snap ring has a thickness greater than other portions of the snap ring.

In a further embodiment, optical fibers of the optical cable are inserted into respective insertion holes in the fiber optic ferrule, and a reinforcing member of the optical cable is fixed to a rear end of a tailstock of the fiber optic ferrule.

In a further embodiment, a heat shrinkable tube is sheathed on the reinforcing member of the optical cable, and the heat shrinkable tube is heated to shrink on the rear end of the tailstock, so as to fix the reinforcing member of the optical cable to the rear end of the tailstock.

In a further embodiment, an elastic sealing ring is provided between an outer surface of the tailstock and an inner surface of the inner housing to provide a seal between the fiber optic ferrule and the inner housing.

In a further embodiment, a front end portion of the inner housing is inserted into a rear end portion of a connecting seat when a front end portion of the outer housing is locked to the connecting seat; and an elastic sealing ring is provided between an outer surface of the front end portion of the inner housing and an inner surface of a rear end portion of the connecting seat to provide a seal between the inner housing and the connecting seat.

In a further embodiment, annular protruding wall opposite to a front end surface of the outer housing is formed on an outer surface of the connecting seat, and an elastic sealing ring is provided between the protruding wall of the connecting seat and the front end surface of the outer housing to provide a seal between the outer housing and the connecting seat.

In a further embodiment, a V-shaped groove is formed in an inner surface of the elastic sealing ring.

### BRIEF DESCRIPTION OF THE DRAWINGS

The above and other features of the present invention will become more apparent by describing in detail exemplary embodiments thereof with reference to the accompanying drawings, in which:
FIG. 1 shows a schematic perspective view of a fiber optic connector according to an embodiment of the present disclosure;
FIG. 2 shows a schematic perspective view of a snap ring of the fiber optic connector shown in FIG. 1;
FIG. 3 shows a schematic enlarged view of a rear end portion of the fiber optic connector shown in FIG. 1; and
FIG. 4 shows a schematic cross-sectional view of an elastic sealing ring of the fiber optic shown in FIG 1.

### DETAILED DESCRIPTION OF EMBODIMENTS

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In addition, in the following detailed description, for purposes of explanation, numerous specific details are set forth in order to provide a thorough understanding of the disclosed embodiments. However, it is apparent that one or more embodiments may also be implemented without these specific details. In other instances, well-known means and devices are schematically shown in the drawings to simplify the drawings.

According to a general technical concept of the present disclosure, there is provided a fiber optic connector including: an outer housing; an inner housing installed in the outer housing; a fiber optic ferrule accommodated in the inner housing; an optical cable inserted into the inner housing and connected to the fiber optic ferrule; and an elastic boot that is wrapped around both a connecting portion of the fiber optic ferrule connecting to the optical cable and a portion of the optical cable adjacent to the connecting portion. A sealing structure is provided between a rear end portion of the outer housing and the elastic boot to provide a seal between the outer housing and the elastic boot.

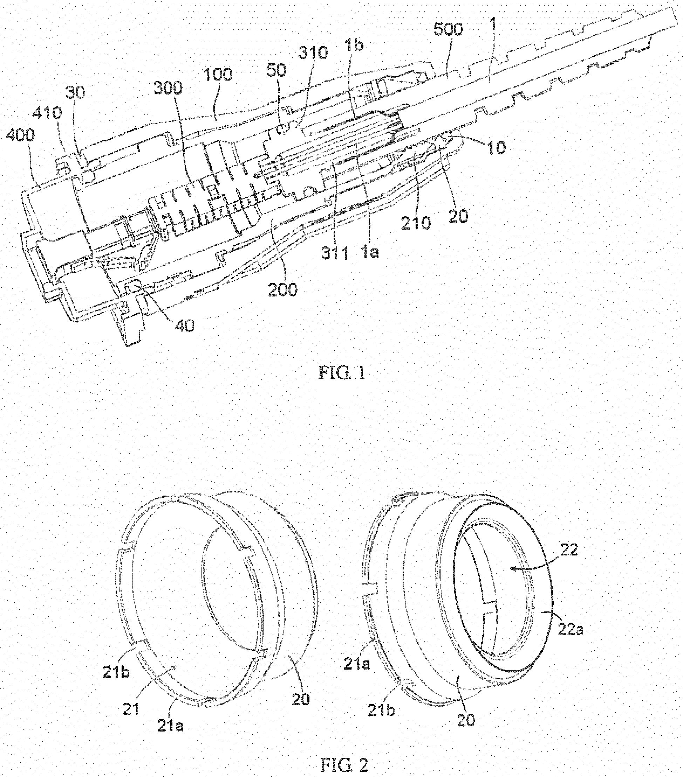

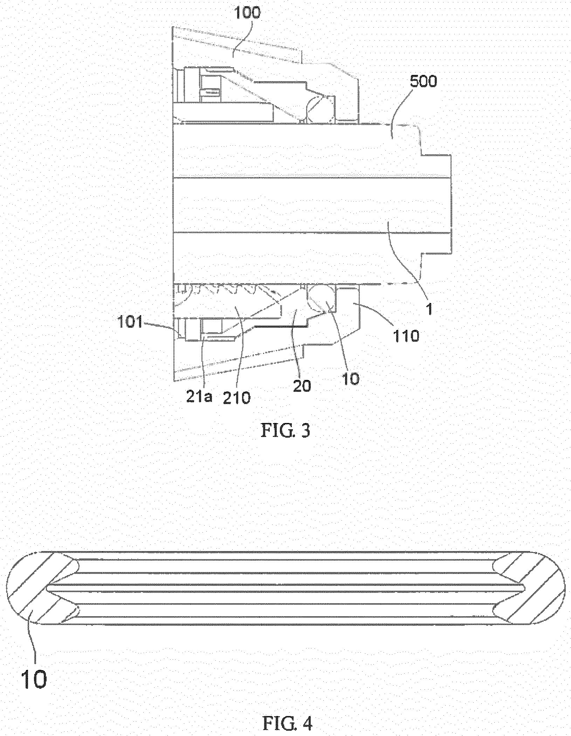

FIG 1 shows a schematic perspective view of a fiber optic connector according to an embodiment of the present disclosure. FIG 3 shows a schematic enlarged view of a rear end portion of the fiber optic connector shown in FIG 1.

As shown in FIG 1 and FIG 3, in the illustrated embodiment, the fiber optic connector mainly includes an outer housing 100, an inner housing 200, a fiber optic ferrule 300, an optical cable 1, and an elastic boot 500. The outer housing 100 has a front end portion adapted to be locked to a connecting seat 400. The inner housing 200 is installed in the outer housing 100. The fiber optic ferrule 300 is accommodated in the inner housing 200 and is adapted to be connected with the optical cable 1. The optical cable 1 is inserted into the inner housing 200 and connected to the fiber optic ferrule 300. The elastic boot 500 is wrapped around both a connecting portion of the fiber optic ferrule 300 connecting to the optical cable 1 and a portion of the optical cable 1 adjacent to the connecting portion.

According to another embodiment of the present disclosure, the outer housing 100 may further be of split type. The outer housing 100 may include a front outer housing and a rear outer housing. The front outer housing is adapted to be locked to the connecting seat 400. The rear outer housing may be locked to the inner housing 200.

As shown in FIGS. 1 and 3, in the illustrated embodiment, a sealing structure 10, 20 (which will be described in detail below) is provided between a rear end portion of the outer housing 100 and the elastic boot 500 inserted into the fiber optic connector, so as to provide a seal between the outer housing 100 and the elastic boot 500.

As shown in FIGS. 1 and 3, in the illustrated embodiment, the foregoing sealing structure 10, 20 mainly include a snap ring 20 and an elastic sealing ring 10. The snap ring 20 and the elastic sealing ring 10 are provided in the rear end portion of the outer housing 100. The elastic sealing ring 10 is located between the snap ring 20 and a rear end wall 110 of the outer housing 100. The elastic boot 500 is inserted from a rear end of the outer housing 100 and passes through the snap ring 20 and the elastic sealing ring 10.

As shown in FIGS. 1 and 3, in the illustrated embodiment, after the inner housing 200 is installed in the outer housing 100, a rear end 210 of the inner housing 200 is pressed against the snap ring 20.

As shown in FIGS. 1 and 3, in the illustrated embodiment, when the front end portion of the outer housing 100 is locked to the connecting seat 400, the outer housing 100 generates an axial pressing force that urges the elastic sealing ring 10 forward. In this way, the elastic sealing ring 10 is sandwiched between the rear end of the snap ring 20 and the rear end wall 110 of the outer housing 100, and is brought in close contact with an outer peripheral surface of the elastic boot 500 and an inner surface of the rear end wall 110 of the outer housing 100. Thus, a seal between the outer housing 100 and the elastic boot 500 is achieved.

As shown in FIGS. 1 and 3, in the illustrated embodiment, an annular protrusion 101 is formed on an inner surface of the outer housing 100. The annular protrusion 101 is configured to hold the snap ring 20 in the rear end portion of the outer housing 100, so as to prevent the snap ring 20 from being disengaged from the outer housing 100.

As shown in FIGS. 1 and 3, in the illustrated embodiment, since the annular protrusion 101 is formed on the inner surface of the outer housing 100, it is possible to hold reliably the snap ring 20 in the rear end portion of the outer housing 100 before the inner housing 200 is installed in the outer housing 100. After the inner housing 200 is installed in the outer housing 100, the snap ring 20 may be retained in the rear end portion of the outer housing 100 by the rear end 210 of the inner housing 200.

FIG 2 shows a schematic perspective view of the snap ring 20 of the fiber optic connector shown in FIG 1.

As shown in FIGS. 1, 2 and 3, in the illustrated embodiment, the snap ring 20 is flared and has a front opening 21 and a rear opening 22. The diameter of the front opening 21 is greater than the diameter of the rear opening 22.

As shown in FIG 1, FIG 2 and FIG. 3, in the illustrated embodiment, an edge portion 21a at the front opening 21 of the snap ring 20 is slidable through the annular protrusion 101 in an axially rearward direction, but is not slidable through the annular protrusion 101 in an axially forward direction, thereby preventing the snap ring 20 from being disengaged from the outer housing 100.

As shown in FIGS. 1, 2 and 3, in the illustrated embodiment, the front end of the snap ring 20 has a thickness less than other portions of the snap ring 20, and a plurality of notches 21b are formed on the edge portion 21a at the front opening 21 of the snap ring 20 so as to increase the elasticity of a front end portion of the snap ring 20, so that the edge portion 21a at the front opening 21 of the snap ring 20 is smoothly slidable through the annular protrusion 101.

As shown in FIGS. 1, 2 and 3, in the illustrated embodiment, the rear opening 22 of the snap ring 20 has a conical inner surface 22a which is inwardly tapered. The conical inner surface 22a is pressed against the elastic sealing ring 10.

As shown in FIGS. 1, 2 and 3, in the illustrated embodiment, the thickness of the rear end portion of the snap ring 20 is greater than the thickness of other portions of the snap ring 20.

As shown in FIG 1, FIG 2 and FIG. 3, in the illustrated embodiment, optical fibers 1a of the optical cable 1 are inserted into respective insertion holes in the fiber optic ferrule 300, and a reinforcing element (e.g., Kevlar fiber) 1b of the optical cable 1 is fixed to a rear end 311 of a tailstock 310 of the fiber optic ferrule 300. In an embodiment of the present disclosure, a heat shrinkable tube may be sheathed on the reinforcing member 1b of the optical cable 1, and the heat shrinkable tube is heated to shrink on the rear end 311 of the tailstock 310, thereby fixing the reinforcing member 1b of the optical cable 1 to the rear end 311 of the tailstock 310.

An elastic sealing ring 50 is provided between an outer surface of the tailstock 310 of the fiber optic ferrule 300 and the inner surface of the inner housing 200 to provide a seal between the fiber optic ferrule 300 and the inner housing 200.

As shown in FIGS. 1, 2 and 3, in the illustrated embodiment, when the front end portion of the outer housing 100 is locked to the connecting seat 400, a front end portion of the inner housing 200 is inserted into a rear end portion of the connecting seat 400. An elastic sealing ring 40 is provided between an outer surface of the front end portion of the inner housing 200 and an inner surface of the rear end portion of the connecting seat 400 to provide a seal between the inner housing 200 and the connecting seat 400.

As shown in FIG 1, FIG 2 and FIG 3, in the illustrated embodiment, an annular protruding wall 410 opposite to a front end surface of the outer housing 100 is formed on an outer surface of the connecting seat 400. An elastic sealing ring 30 is provided between the protruding wall 410 of the connecting seat 400 and the front end surface of the outer housing 100 to provide a seal between the outer housing 100 and the connecting seat 400.

FIG 4 shows a schematic cross-sectional view of the elastic sealing ring 10 shown in FIG 1. As shown in FIG 4, in the illustrated embodiment, a V-shaped groove is formed in an inner surface of the elastic sealing ring 10 such that an inner side of the cross section of the elastic sealing ring 10 is substantially M-shaped. An outer side of the cross section of the elastic sealing ring 10 is approximately semicircular. The elastic sealing ring 10 with the illustrated particular shape can achieve a good sealing performance.

However, it should be noted that the present disclosure is not limited to the illustrated embodiment, and the entire cross section of the elastic sealing ring 10 may be substantially circular.

Those skilled in the art can understand that the above-described embodiments are all exemplary, and those skilled in the art can improve it. The structures described in the various embodiments can be freely combined without a conflict in structure or principle.

Although the present disclosure has been described with reference to the accompanying drawings, the embodiments disclosed in the accompanying drawings are intended to illustrate the preferred embodiments of the present disclosure exemplarily, and cannot be construed as a limitation of the present disclosure.

Although some embodiments according to the present general inventive concept have been shown and described, those of ordinary skill in the art will understand that modifications may be made to these embodiments.

The scope of the disclosure is defined by the claims.

It should be noted that the wording "include", "including", "comprise", or "comprising" does not exclude other elements or steps, and the wording "a" or "an" does not exclude plural elements listed behind the wording.

## Claims

1. A fiber optic connector comprising:
an outer housing (100);
an inner housing (200) installed in the outer housing (100);
a fiber optic ferrule (300) accommodated in the inner housing (200);
an optical cable (1) inserted into the inner housing (200) and connected to the fiber optic ferrule (300); and
an elastic boot (500) that is wrapped around both a connecting portion of the fiber optic ferrule (300) connecting to the optical cable (1) and a portion of the optical cable (1) adjacent to the connecting portion,
**characterized in that** a sealing structure is provided between a rear end portion of the outer housing (100) and the elastic boot (500) to provide a seal between the outer housing (100) and the elastic boot (500).

2. The fiber optic connector according to claim 1, wherein the sealing structure comprises a snap ring (20) and an elastic sealing ring (10) that both are provided in the rear end portion of the outer housing (100), the elastic sealing ring (10) being located between the snap ring (20) and a rear end wall (110) of the outer housing (100); and
wherein a rear end (210) of the inner housing (200)is pressed against the snap ring (20), and the elastic boot (500) is inserted from a rear end of the outer housing (100) and passes through the snap ring (20) and the elastic sealing ring (10).

3. The fiber optic connector according to claim 2, wherein the outer housing (100) is configured to generate an axial pressing force for urging the elastic sealing ring (10) forward, so that the elastic sealing ring (10) is sandwiched between a rear end of the snap ring (20) and the rear end wall (110) of the outer housing (100) and is brought into close contact with both an outer peripheral surface of the elastic boot (500) and an inner surface of the rear end wall (110) of the outer housing (100).

4. The fiber optic connector according to claim 2, wherein an annular protrusion (101) is provided on an inner surface of the outer housing (100), the annular protrusion being configured to hold the snap ring (20) in the rear end portion of the outer housing (100) so as to prevent the snap ring (20) from being disengaged from the outer housing (100).

5. The fiber optic connector according to claim 4, wherein the snap ring (20) is flared and has a front opening (21) and a rear opening (22), the front opening (21) having a diameter greater than the rear opening (22).

6. The fiber optic connector according to claim 5, wherein an edge portion (21a) at the front opening (21) of the snap ring (20) is slidable through the annular protrusion (101) in an axially rearward direction and is not slidable through the annular protrusion (101) in an axially forward direction, so as to prevent the snap ring (20) from being disengaged from the outer housing (100).

7. The fiber optic connector according to claim 6, wherein a front end portion of the snap ring (20) has a thickness less than other portions of the snap ring (20), and a plurality of notches (21b) are formed on the edge portion (21a) at the front opening (21) of the snap ring (20) so as to increase an elasticity of the front end portion of the snap ring (20), so that the edge portion (21a) at the front opening (21) of the snap ring (20) is smoothly slidable through the annular protrusion (101).

8. The fiber optic connector according to claim 5, wherein the rear opening (22) of the snap ring (20) has a conical inner surface (22a) which is inwardly tapered, the conical inner surface being pressed against the elastic sealing ring (10).

9. The fiber optic connector according to claim 8, wherein a rear end portion of the snap ring (20) has a thickness greater than other portions of the snap ring (20).

10. The fiber optic connector according to claim 1, wherein optical fibers (1a) of the optical cable (1) are inserted into respective insertion holes in the fiber optic ferrule(300), and a reinforcing member (1b) of the optical cable (1) is fixed to a rear end (311) of a tailstock (310) of the fiber optic ferrule (300).

11. The fiber optic connector according to claim 10, wherein a heat shrinkable tube is sheathed on the reinforcing member (1b) of the optical cable (1), and the heat shrinkable tube is heated to shrink on the rear end (311) of the tailstock (310), so as to fix the reinforcing member (1b) of the optical cable (1) to the rear end (311) of the tailstock (310).

12. The fiber optic connector according to claim 10, wherein an elastic sealing ring (50) is provided between an outer surface of the tailstock (310) and an inner surface of the inner housing (200) to provide a seal between the fiber optic ferrule (300) and the inner housing (200).

13. The fiber optic connector according to claim 1, wherein a front end portion of the inner housing (200) is inserted into a rear end portion of a connecting seat (400) when a front end portion of the outer housing (100) is locked to the connecting seat (400); and
wherein an elastic sealing ring (40) is provided between an outer surface of the front end portion of the inner housing (200) and an inner surface of a rear end portion of the connecting seat (400) to provide a seal between the inner housing (200) and the connecting seat (400).

14. The fiber optic connector according to claim 1, wherein an annular protruding wall (410) opposite to a front end surface of the outer housing (100) is formed on an outer surface of the connecting seat (400), and
wherein an elastic sealing ring (30) is provided between the protruding wall (410) of the connecting seat (400) and the front end surface of the outer housing (100) to provide a seal between the outer housing (100) and the connecting seat (400).

15. The fiber optic connector according to claim 2, wherein a V-shaped groove is formed in an inner surface of the elastic sealing ring (10).

## Patentansprüche

1. Faseroptik-Verbinder, der umfasst:
ein äußeres Gehäuse (100);
ein inneres Gehäuse (200), das in dem äußeren Gehäuse (100) installiert ist;
eine Faseroptik-Ferrule (300), die in dem inneren Gehäuse (200) aufgenommen ist;
ein Lichtleiterkabel (1), das in das innere Gehäuse (200) eingeführt und mit der Faseroptik-Ferrule (300) verbunden ist; sowie
eine elastische Tülle (500), die sowohl um einen Verbindungsabschnitt der Faseroptik-Ferrule (300), der mit dem Lichtleiterkabel (1) verbunden ist, als auch einen an den Verbindungsabschnitt angrenzenden Abschnitt des Lichtleiterkabels (1) herum gewickelt ist,
**dadurch gekennzeichnet, dass** eine Dichtungsstruktur zwischen einem hinteren Endabschnitt des äußeren Gehäuses(100) und der elastischen Tülle (500) vorhanden ist, um eine Dichtung zwischen dem äußeren Gehäuse (100) und der elastischen Tülle (500) zu schaffen.

2. Faseroptik-Verbinder nach Anspruch 1, wobei die Dichtungsstruktur einen Sicherungsring (20) sowie einen elastischen Dichtungsring (10) umfasst, die sich beide in dem hinteren Endabschnitt des äußeren Gehäuses (100) befinden, wobei der elastische Dichtungsring (10) zwischen dem Sicherungsring (20) und einer hinteren Abschlusswand (110) des äußeren Gehäuses (100) positioniert ist; und
wobei ein hinteres Ende (210) des inneren Gehäuses (200) an den Sicherungsring (20) gepresst wird und die elastische Tülle (500) über ein hinteres Ende des äußeren Gehäuses (100) eingeführt wird und durch den Sicherungsring (20) und den elastischen Dichtungsring (10) hindurchtritt.

3. Faseroptik-Verbinder nach Anspruch 2, wobei das äußere Gehäuse (100) so ausgeführt ist, dass es eine axiale Presskraft erzeugt, um den elastischen Dichtungsring (10) nach vorn zu drücken, sodass der elastische Dichtungsring (10) zwischen einem hinteren Ende des Sicherungsrings (20) und der hinteren Abschlusswand (110) des äußeren Gehäuses (100) eingeschlossen wird und in engen Kontakt sowohl mit einer Außenumfangsfläche der elastischen Tülle (500) als auch einer Innenfläche der hinteren Abschlusswand (110) des äußeren Gehäuses (100) gebracht wird.

4. Faseroptik-Verbinder nach Anspruch 2, wobei ein ringförmiger Vorsprung (101) an einer Innenfläche des äußeren Gehäuses (100) vorhanden ist, und der ringförmige Vorsprung so ausgeführt ist, dass er den Sicherungsring (20) in dem hinteren Endabschnitt des äußeren Gehäuses (100) hält, um so zu verhindern, dass der Sicherungsring (20) von dem äußeren Gehäuse (100) gelöst wird.

5. Faseroptik-Verbinder nach Anspruch 4, wobei der Sicherungsring (20) ausgeweitet ist und eine vordere Öffnung (21) sowie eine hintere Öffnung (22) aufweist und die vordere Öffnung (21) einen Durchmesser hat, der größer ist als der der hinteren Öffnung (22).

6. Faseroptik-Verbinder nach Anspruch 5, wobei ein Randabschnitt (21a) an der vorderen Öffnung (21) des Sicherungsrings (20) in einer axialen Rückwärtsrichtung durch den ringförmigen Vorsprung (101) hindurch geschoben werden kann und in einer axialen Vorwärtsrichtung nicht durch den ringförmigen Vorsprung (101) hindurch geschoben werden kann, so dass verhindert wird, dass der Sicherungsring (20) von dem äußeren Gehäuse (100) gelöst wird.

7. Faseroptik-Verbinder nach Anspruch 6, wobei ein vorderer Endabschnitt des Sicherungsrings (20) eine Dicke hat, die geringer ist als die anderer Abschnitte des Sicherungsrings (20), und eine Vielzahl von Einkerbungen (21b) an dem Randabschnitt (21a) an der vorderen Öffnung (21) des Sicherungsrings (20) ausgebildet sind, um eine Elastizität des vorderen Endabschnitts des Sicherungsrings (20) zu erhöhen, so dass der Randabschnitt (21a) an der vorderen Öffnung (21) des Sicherungsrings (20) ungehindert durch den ringförmigen Vorsprung (101) hindurch geschoben werden kann.

8. Faseroptik-Verbinder nach Anspruch 5, wobei die hintere Öffnung (22) des Sicherungsrings (20) eine konische Innenfläche (22a) aufweist, die sich nach innen verjüngt, und die konische Innenfläche an den elastischen Dichtungsring (10) gepresst wird.

9. Faseroptik-Verbinder nach Anspruch 8, wobei ein hinterer Endabschnitt des Sicherungsrings (20) eine Dicke hat, die größer ist als die anderer Abschnitte des Sicherungsrings (20).

10. Faseroptik-Verbinder nach Anspruch 1, wobei Lichtleiterfasern (1a) des Lichtleiterkabels (1) in jeweilige Einführungslöcher in der Faseroptik-Ferrule (300) eingeführt sind und ein Verstärkungselement (1b) des Lichtleiterkabels (1) an einem hinteren Ende (311) eines Endstücks (310) der Faseroptik-Ferrule (300) befestigt ist.

11. Faseroptik-Verbinder nach Anspruch 10, wobei ein Warmschrumpfschlauch auf das Verstärkungselement (1b) des Lichtleiterkabels (1) aufgeschoben ist und der Warmschrumpfschlauch so erhitzt wird, dass er auf das hintere Ende (311) des Endstücks (310) aufschrumpft, um so das Verstärkungselement (1b) des Lichtleiterkabels (1) an dem hinteren Ende (311) des Endstücks (310) zu fixieren.

12. Faseroptik-Verbinder nach Anspruch 10, wobei ein elastischer Dichtungsring (50) zwischen einer Außenfläche des Endstücks (310) und einer Innenfläche des inneren Gehäuses (200) vorhanden ist, um eine Dichtung zwischen der Faseroptik-Ferrule (300) und dem inneren Gehäuse (200) zu schaffen.

13. Faseroptik-Verbinder nach Anspruch 1, wobei ein vorderer Endabschnitt des inneren Gehäuses (200) in einen hinteren Endabschnitt eines Verbindungssitzes (400) eingeführt wird, wenn ein vorderer Endabschnitt des äußeren Gehäuses (100) an dem Verbindungssitz (400) arretiert wird; und
wobei ein elastischer Dichtungsring (40) zwischen einer Außenfläche des vorderen Endabschnitts des inneren Gehäuses (200) und einer Innenfläche eines hinteren Endabschnitts des Verbindungssitzes (400) vorhanden ist, um eine Dichtung zwischen dem inneren Gehäuse (200) und dem Verbindungssitz (400) zu schaffen.

14. Faseroptik-Verbinder nach Anspruch 1, wobei eine ringförmige vorstehende Wand (410),
die einer vorderen Endfläche des äußeren Gehäuses (100) gegenüberliegt, an einer Außenfläche des Verbindungssitzes (400) ausgebildet ist, und
wobei ein elastischer Dichtungsring (30) zwischen der vorstehenden Wand (410) des Verbindungssitzes (400) und der vorderen Endfläche des äußeren Gehäuses (100) vorhanden ist, um eine Dichtung zwischen dem äußeren Gehäuse (100) und dem Verbindungssitz (400) zu schaffen.

15. Faseroptik-Verbinder nach Anspruch 2, wobei eine V-förmige Nut in einer Innenfläche des elastischen Dichtungsrings (10) ausgebildet ist.

## Revendications

1. Connecteur de fibre optique comprenant :
un boîtier externe (100) ;
un boîtier interne (200) installé dans le boîtier externe (100) ;
une virole de fibre optique (300) logée dans le boîtier interne (200) ;
un câble optique (1) inséré dans le boîtier interne (200) et connecté à la virole de fibre optique (300) ; et
un manchon élastique (500) qui est enroulé à la fois autour d'une portion de connexion de la virole de fibre optique (300) établissant une connexion avec le câble optique (1) et autour d'une portion du câble optique (1) adjacente à la portion de connexion,
**caractérisé en ce qu'**une structure d'étanchéité est pourvue entre une portion d'extrémité arrière du boîtier externe (100) et le manchon élastique (500) afin d'assurer l'étanchéité entre le boîtier externe (100) et le manchon élastique (500).

2. Connecteur de fibre optique selon la revendication 1,
dans lequel la structure d'étanchéité comprend une bague clipsable (20) et une bague d'étanchéité élastique (10) qui sont toutes deux pourvues dans la portion d'extrémité arrière du boîtier externe (100), la bague d'étanchéité élastique (10) étant située entre la bague clipsable(20) et une paroi d'extrémité arrière (110) du boîtier externe (100) ; et
dans lequel une extrémité arrière (210) du boîtier interne (200) est pressée contre la bague clipsable (20), et le manchon élastique (500) est inséré par une extrémité arrière du boîtier externe (100) et passe à travers la bague clipsable (20) et la bague d'étanchéité élastique (10).

3. Connecteur de fibre optique selon la revendication 2, dans lequel le boîtier externe (100) est configuré pour générer une force de compression axiale afin de pousser la bague d'étanchéité élastique (10) vers l'avant, de sorte que la bague d'étanchéité élastique (10) soit intercalée entre une extrémité arrière de la bague clipsable (20) et la paroi d'extrémité arrière (110) du boîtier externe (100) et soit mise en contact étroit à la fois avec une surface périphérique externe du manchon élastique (500) et avec une surface interne de la paroi d'extrémité arrière (110) du boîtier externe (100).

4. Connecteur de fibre optique selon la revendication 2, dans lequel une protubérance annulaire (101) est pourvue sur une surface interne du boîtier externe (100), la protubérance annulaire étant configurée pour maintenir la bague clipsable (20) dans la portion d'extrémité arrière du boîtier externe (100) afin d'empêcher la bague clipsable (20) de se désengager du boîtier externe (100).

5. Connecteur de fibre optique selon la revendication 4, dans lequel la bague clipsable (20) est évasée et comporte une ouverture avant (21) et une ouverture arrière (22), l'ouverture avant (21) ayant un diamètre supérieur à celui de l'ouverture arrière (22).

6. Connecteur de fibre optique selon la revendication 5, dans lequel une portion de bord (21a) à l'ouverture avant (21) de la bague clipsable (20) peut glisser à travers la protubérance annulaire (101) dans une direction axiale vers l'arrière et ne peut pas glisser à travers la protubérance annulaire (101) dans une direction axiale vers l'avant, de manière à empêcher que la bague clipsable (20) ne se désengage du boîtier externe (100).

7. Connecteur de fibre optique selon la revendication 6, dans lequel une portion d'extrémité avant de la bague clipsable (20) présente une épaisseur inférieure à celle d'autres portions de la bague clipsable (20), et une pluralité d'encoches (21b) est formée sur la portion de bord (21a) à l'ouverture avant (21) de la bague clipsable (20) de manière à augmenter l'élasticité de la portion d'extrémité avant de la bague clipsable (20), de sorte que la portion de bord (21a) à l'ouverture avant (21) de la bague clipsable (20) puisse glisser doucement à travers la protubérance annulaire (101).

8. Connecteur de fibre optique selon la revendication 5, dans lequel l'ouverture arrière (22) de la bague clipsable (20) comporte une surface interne conique (22a) qui est fuselée vers l'intérieur, la surface interne conique étant pressée contre la bague d'étanchéité élastique (10).

9. Connecteur de fibre optique selon la revendication 8, dans lequel une portion d'extrémité arrière de la bague clipsable (20) présente une épaisseur supérieure à celle d'autres portions de la bague clipsable (20).

10. Connecteur de fibre optique selon la revendication 1, dans lequel les fibres optiques (1a) du câble optique (1) sont insérées dans des trous d'insertion respectifs de la virole de fibre optique (300), et un élément de renfort (1b) du câble optique (1) est fixé à une extrémité arrière (311) d'une contre-pointe (310) de la virole de fibre optique (300).

11. Connecteur de fibre optique selon la revendication 10, dans lequel un tube thermorétractable est gainé sur l'élément de renfort (1b) du câble optique (1), et le tube thermorétractable est chauffé pour se rétracter sur l'extrémité arrière (311) de la contre-pointe (310), de manière à fixer l'élément de renfort (1b) du câble optique (1) sur l'extrémité arrière (311) de la contre-pointe (310).

12. Connecteur de fibre optique selon la revendication 10, dans lequel une bague d'étanchéité élastique (50) est pourvue entre une surface externe de la contre-pointe (810) et une surface interne du boîtier interne (200) afin d'assurer l'étanchéité entre la virole de fibre optique (300) et le boîtier interne (200).

13. Connecteur de fibre optique selon la revendication 1,
dans lequel une portion d'extrémité avant du boîtier interne (200) est insérée dans une portion d'extrémité arrière d'un siège de connexion (400) quand la portion d'extrémité avant du boîtier externe (100) est verrouillée sur le siège de connexion (400) ; et
dans lequel une bague d'étanchéité élastique (40) est pourvue entre une surface externe de la portion d'extrémité avant du boîtier interne (200) et une surface interne d'une portion d'extrémité arrière du siège de connexion (400) afin d'assurer l'étanchéité entre le boîtier interne (200) et le siège de connexion (400).

14. Connecteur de fibre optique selon la revendication 1,
dans lequel une paroi protubérante annulaire (410) opposée à une surface d'extrémité avant du boîtier externe (100) est formée sur une surface externe du siège de connexion (400), et
dans lequel une bague d'étanchéité élastique (30) est pourvue entre la paroi protubérante (410) du siège de connexion (400) et la surface d'extrémité avant du boîtier externe (100) afin d'assurer l'étanchéité entre le boîtier externe (100) et le siège de connexion (400).

15. Connecteur de fibre optique selon la revendication 2, dans lequel une rainure en forme de V est formée dans une surface interne de la bague d'étanchéité élastique (10).
